Europäisches Patentamt

European Patent Office

Office européen des brevets

(19)

(11) **EP 0 502 176 B1**

(12) **EUROPEAN PATENT SPECIFICATION**

(45) Date of publication and mention
of the grant of the patent:
**26.03.1997 Bulletin 1997/13**

(21) Application number: **91918372.3**

(22) Date of filing: **27.09.1991**

(51) Int Cl.⁶: **H04M 11/04**, H04B 3/54

(86) International application number:
**PCT/US91/07133**

(87) International publication number:
**WO 92/06552 (16.04.1992 Gazette 1992/09)**

(54) **POWER LINE COMMUNICATION SYSTEM**

NETZLEITUNGSÜBERTRAGUNGSSYSTEM

SYSTEME DE COMMUNICATION PAR LIGNE D'ALIMENTATION

(84) Designated Contracting States:
**AT BE CH DE DK ES FR GB GR IT LI LU NL SE**

(30) Priority: **28.09.1990 US 589472**

(43) Date of publication of application:
**09.09.1992 Bulletin 1992/37**

(73) Proprietor: **MOTOROLA LIGHTING INC.**
**Buffalo Grove, IL 60089 (US)**

(72) Inventor: **STEVENS, Carlile, R.**
**Alamo, CA 94507 (US)**

(74) Representative: **Dunlop, Hugh Christopher**
**Motorola,**
**European Intellectual Property,**
**Midpoint,**
**Alencon Link**
**Basingstoke, Hampshire RG21 7PL (GB)**

(56) References cited:
**EP-A- 0 018 334          GB-A- 1 600 056**
**US-A- 4 097 692          US-A- 4 106 007**
**US-A- 4 300 126          US-A- 4 914 418**
**US-A- 5 005 187**

**Description**

Background of the Invention

The present invention relates to a power line communication system and, in particular, to a system for controlling ballasts for gas discharge lamps, such as fluorescent lamps.

Brief Description of the Prior Art

In virtually all commercial installations, lamps are turned on as soon as they are needed for illumination and turned off when the last person leaves, including maintenance workers. A large number of these installations also receive natural light.

Recently it has become economically feasible to provide control means for turning off the lamps when daylight is adequate. Devices are now on the market for reducing artificial light in proportion to the amount of daylight received.

Typically, such control means utilize low voltage control wiring which must be added to the lighting system to supply the signal for controlling the luminosity of the lamps in the system. The installation cost of the additional wiring often renders the system ineffective in terms of cost savings.

Since the lamps are already connected to the power distribution system, installation costs could be reduced significantly if the control signal were transmitted over the power lines. Most power distribution systems in the world operate at fifty to sixty hertz. By superimposing a much higher frequency carrier signal for the control commands, the power distribution system is used instead of the additional, low voltage control wiring.

Power line communication systems have three basic drawbacks: noise, isolation, and complexity. The power distribution system normally contains a great deal of electrical noise, both natural and man-made. This noise interferes with the readability of the carrier signal superimposed on the system and requires multiple transmissions of the same data to assure that the receiving device responds correctly to the transmitted signal. Once the signal is placed on the line, it appears everywhere on the distribution system. To prevent this, isolation devices must be inserted in series with the power distribution system and carry the full current thereof. Such devices are expensive, both initially and to maintain. In some cases, there is crosstalk between buildings on the same power distribution system. Because of the complexity needed to assure reliable performance, these communication systems are expensive, which reduces the number of applications in which they can be used.

GB-A-1 600 056 discloses a control system including a transmitter and receiver which communicate over a.c. power lines at the zero crossing point of the a.c. current waveform. That system includes a detector for detecting the zero crossing point and a pulse generator which produces pulses.

Summary of the Invention

In accordance with a first aspect of the invention, there is provided a transmitter for a system for communicating over AC power lines comprising:

zero crossing detector means for producing a pulse in response to each zero crossing of said alternating current;
pulse generating means coupled to said power lines for producing pulses synchronized with and at the same frequency as said alternating current characterized in that it further comprises;
shift register means for storing data representative of a predetermined power level;
control means connected to said shift register means for causing said data to be serially read out from said shift register means as a series of pulses;
logic means coupled to said zero crossing detector means, said pulse generating means, and said shift register means for combining the outputs thereof to produce a control signal comprising pulses; and
switch means in series with at least one of said AC power lines and responsive to said control signal for being selectively rendered conductive or non-conductive.

In accordance with a second aspect of the invention there is provided a receiver for a system for communicating over AC power lines comprising:

zero crossing detector means for producing a pulse in response to each zero crossing of said alternating current;
characterized in that it further comprises pulse duration detection means coupled to the output of said zero crossing detector means for producing a pulse only when the duration of a pulse from said zero crossing detector means exceeds a predetermined time;
shift register means coupled to the output of said pulse duration detection means for storing data, said shift register means having parallel data outputs;

logic means coupled to the outputs of said shift register means for analyzing the content of said data;

data register means coupled to the output of said logic means and said shift register means for selectively storing data under the control of said logic means ;

timing means coupled to said data register means for producing a pulse width modulated signal in response to said data; and

switch means connected to one of said AC power lines and responsive to said pulse width modulated signal for being selectively rendered conductive or non-conductive. Since the interruption occurs at or near the zero crossing of the current, little actual power is lost. Power loss is further minimized in that the interruption is preferably on the order of one or two milliseconds, a small fraction of the period (seventeen to twenty milliseconds) of the frequency of the power line. The data is transmitted only to those devices located downstream from the transmitter or transmitter. This eliminates the problem of isolation. The receiver detects the interruptions in the current and interprets a certain pattern as logic "ones" and "zeroes." If the pattern fits a programmed pattern, the receiver responds as directed. Because of the simplicity of the present invention, inexpensive components can be used to implement the invention.

Brief Description of the Drawings

A more complete understanding of the present invention can be obtained by considering the following detailed description in conjunction with the accompanying drawings, in which:

FIG. 1 illustrates a communication system in accordance with the present invention.

FIG. 2 illustrates a preferred embodiment of a transmitter in accordance with the present invention.

FIG. 3 illustrates waveforms showing the operation of the transmitter.

FIG. 4 illustrates a preferred embodiment of a receiver in accordance with the present invention.

FIG. 5 illustrates waveforms showing the operation of the system with reactive loads.

FIG. 6 illustrates a preferred embodiment of a microcontroller used as a receiver in accordance with the present invention.

FIG. 7 illustrates a preferred embodiment of a microcontroller used as a transmitter in accordance with the present invention.

Detailed Description of the Invention

In a preferred embodiment of a communication system in accordance with the present invention, transmitter 13 is connected across power lines 11 and 12, which may be referred to herein as "supply" and "common," respectively. The output of transmitter 13 sends information over the power lines to a receiver, such as receiver 14, by momentarily interrupting the power through the lines. Receiver 14 detects the interruptions in current or voltage and produces a control signal on line 16. In a preferred embodiment of the present invention, this control signal comprises a pulse width modulated signal proportional to the desired brightness of a lamp. Load 17 can comprise any suitable device, such as an electronic ballast responsive to the control signal to vary the brightness of the lamp(s) connected thereto. In the simplest embodiment of the present invention, load 17 can comprise an incandescent lamp, or a fluorescent lamp with a conventional ballast, connected between lines 12 and 16.

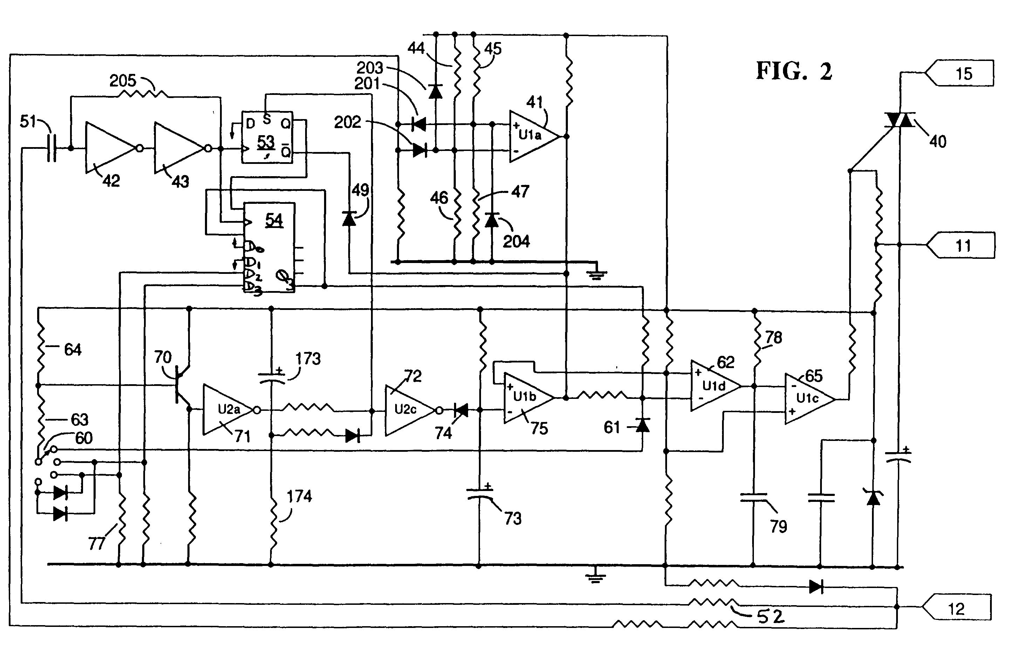

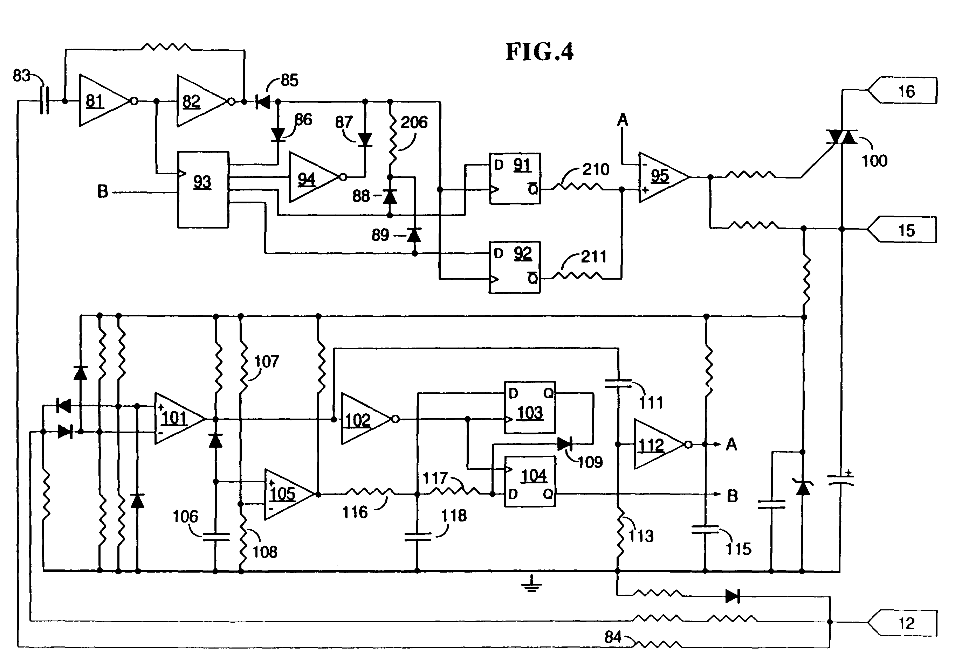

A preferred embodiment of transmitter 13 is illustrated in FIG. 2. Supply line 11 and load line 15 are interconnected by bi-directional switch 40, illustrated as a triac. Triac 40 is normally conducting, coupling full power to the devices connected downstream therefrom. The circuitry of FIG. 2, connected to the gate of triac 40, provides a series of pulses of predetermined time and duration relative to the zero crossing of the AC power line, to form a series of interruptions or notches at approximately the zero crossings to provide a data word for a receiver. These are illustrated in FIG. 3 as notches 301-303.

The notch is preferably approximately 1.2 milliseconds in duration and occurs on both the positive and negative half cycles of line current. In implementing the present invention, the occurrence of a notch in the positive half cycle followed by a notch in the negative half cycle is defined as a "one" data bit. The absence of notches is defined as a "zero" data bit. Any other pattern is ignored, illustrated in FIG. 3 as an "x" indicating a mismatch or "don't care". It is understood by those of ordinary skill in the art that this definition is arbitrary and any other consistent definition is suitable. The data word sent by the transmitter represents the power level to be applied to a load.

Timing for the pulses is provided by a zero crossing detector comprising comparator 41 and the circuitry associated with the input thereof, and by cascaded inverters 42 and 43 which act as a square wave clock generator synchronized with the AC waveform applied to the input thereof. Specifically, comparator 41 has resistors 44-47 connected as shown to the inputs thereof. Diodes 201 and 202 steer the positive and negative half cycles of the AC line to the appropriate input of comparator 41. Diodes 203 and 204 provide suitable clamping. Resistors 44 and 47 are preferably of the same value and of a value greater than resistors 45 and 46 respectively. Because of the relative values of the resistors, comparator 41 produces a pulse at each zero crossing of the AC line current when the voltage thereof is within the narrow range defined by resistors 44-47. Comparator 41 produces a series of pulses at a frequency of 120 Hz.

Timing is also provided by cascaded inverters 42 and 43. The input of inverter 42 is connected by capacitor 51 and resistor 52 to the "common" terminal (line 12). The values of these components are chosen to provide approximately a 30 degree phase shift, or delay, of the signal applied to the input of inverter 42. Inverters 42 and 43 form a Schmitt trigger, as well known per se in the art, with the hysteresis supplied by the coupling of the output of inverter 43 to the input of inverter 42 by resistor 205, producing a 60 Hz square wave.

The output of inverter 43 is coupled to the clock inputs of D-flip flop 53 and shift register 54. Shift register 54 has four data inputs $D_0$-$D_3$ and preferably has a parallel load, serial output capability. The $D_0$ input is tied high, that is, it is coupled to the positive supply voltage. The $D_1$ data input is tied low, that is, it is coupled to ground. When read out serially, this one-then-zero sequence defines a fixed prefix identifying subsequent zero crossings as data. The $D_2$ and $D_3$ data inputs are connected to switch 60 which selectively connects these inputs to high or low voltages to form the binary codes for decimal 0-3.

The $Q$ output of D-flip flop 53 is coupled to the parallel load input of shift register 54. The data presented at inputs $D_0$-$D_3$ is stored in shift register 54 upon a positive going pulse from inverter 43, if the $Q$ output of D-flip flop 53 is high. The $Q_3$ output (most significant bit) of shift register 54 is coupled to the serial input for reloading data when shift register 54 is operating in the serial mode. In the case where switch 60 is in the upper-most (off) position, diode 61 clamps the inverting input of comparator 62 high through resistor 63 and 64. This drives the output of comparator 62 low which, in turn, drives the output of comparator 65 high, which turns off triac 40 so that no power flows to the load.

When switch 60 is moved to the next position, a pulse is produced through transistor 70 and inverter 71 to the $S$ input of flip flop 53. This causes the $Q$ output of flip flop 53 to go high, which causes a parallel loading of the data into shift register 54 on the next clock cycle. The $Q$ output is low while waiting for the next clock pulse. This clamps the outputs of comparators 41 and 75 low through diode 49, preventing any notches until proper data is loaded into shift register 54. In this data, input $D_0$ always equals a logic 1 because that input is tied high. Input $D_1$ is always logic 0 because that input is tied low. Input $D_2$ remains zero since it is coupled to ground through resistor 77. Input $D_3$, however, is now a logic 1 since the input resistor is now coupled through resistors 63 and 64 to the supply voltage. Thus, upon completion of the parallel load, the binary data 1001 is contained in shift register 54. In addition, diode 61 is no longer clamping the inverting input of comparator 62 to the supply voltage.

The change in switch position causes a pulse to appear at the $S$ input of flip flop 53 as previously described. In addition, this pulse causes the output of inverter 72 to go low, discharging capacitor 73 through diode 74. The low voltage at the input of comparator 75 causes the output to go high. Actually it is more correct to say that the output of comparator 75 becomes open, since the comparators preferably have what is known as open collector outputs.

Since the output of comparator 75 has become open, zero crossing pulses from comparator 41 are applied to the inverted input of comparator 62. In addition, the output from shift register 54 is applied to the input of comparator 62. The combination of these two signals produces a pair of notches at the zero crossings of a single cycle of the AC line voltage by momentarily disabling triac 40. The duration of the individual notches is determined by the time constant of RC network 78, 79. The data in shift register 54 is read out serially in this manner and transmitted to the load devices connected downstream from triac 40. During this time, capacitor 73 is recharging and eventually reaches a potential which causes the output of comparator 75 to go low, terminating the generation of notches. Thus, capacitor 73 and comparator 75 comprise a burst timer which determines the duration of the data burst. In a data burst, the data is sent two or three times, for example, for reliability.

The remaining two switch positions operate similarly, except that the particular data sent is different. Specifically, in the next position, the data sent is 0101. In the next and lower most position, the data sent is 1101, indicative of full power.

The first and second bits, reading from the right, must always be one and zero, respectively, for the data to be recognized as valid by a receiver. While this four bit word provides three power levels (and off) or "on" and "off" data for two locations, it is apparent that a larger word can be used to provide more levels and/or greater address capability. For example, an eight bit word enables one to obtain sixteen levels of power and four zones of control. The word comprises eight bits representing the following data.

| bit | 7 | 6 | 5 | 4 | 3 | 2 | 1 | 0 |
|------|---|---|---|---|---|---|---|---|
| data | y | y | x | x | x | x | 0 | 1 |

Wherein "y" represents the address of one or more receivers responding to one of the four possible codes and "x" represents one of sixteen levels of power.

In order to assure reliability in the system as described, data is sent upon start-up and upon any transient which could upset the operation of the receiver. This function is performed by capacitor 173 and resistor 174. Upon start-up, capacitor 173 begins to charge and has a low voltage drop across it. This forces the input of inverter 72 high, which resets the previously described burst timer and sets flip-flop 53, which causes data to be set into shift register 54 via the **Q** output, as previously described. A voltage transient on the power line has the same effect as start-up since the transient is coupled through capacitor 173 to do the same thing as just described.

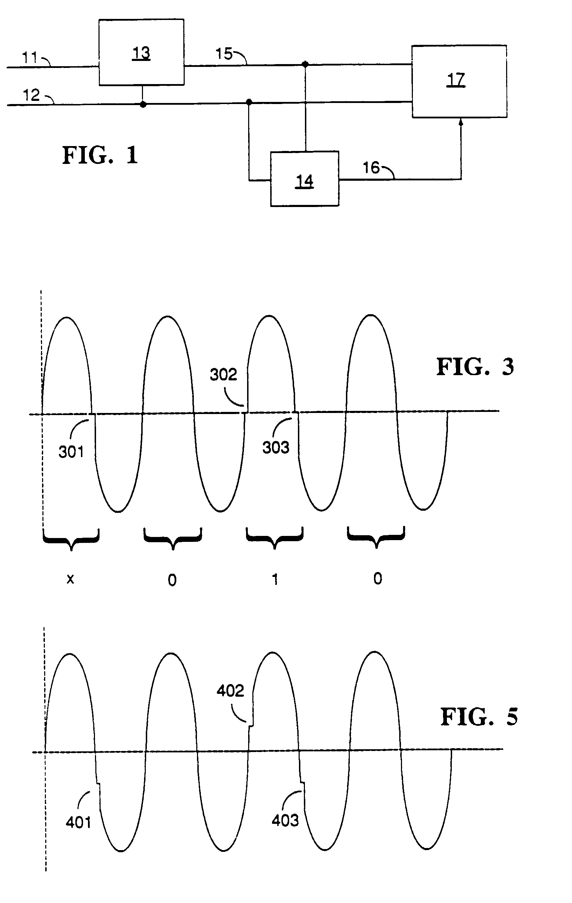

As illustrated in FIG. 1, the notches are transmitted downstream from transmitter 13 to load device 17. The transmission of pulses represents a reduction of a few percent in the available power to load 17 only during the burst of data. In accordance with the present invention, a receiver is connected downstream from transmitter 13 for detecting the notches in the current or voltage on the supply lines and producing a control signal on line 16. FIG. 4 illustrates a suitable receiver.

In FIG. 4, some portions of the receiver circuit are structurally similar to portions of the transmitter circuit but actually provide a slightly different function. For example, the zero crossing detector circuitry, while producing pulses at 120 Hz, produces pulses of different durations depending upon whether or not a notch is present on the line. Similarly the clock circuitry for generating a 60 Hz clock signal is similar to the transmitter clock.

Specifically, cascaded inverters 81 and 82 are connected to the "common" line by capacitor 83 and resistor 84 which provide approximately a thirty degree phase shift in the signal applied to inverter 81. The output of inverter 82 is coupled to the input of inverter 81 to provide positive feedback for hysteresis. The output of inverter 82 provides a 60 Hz clock signal which is coupled, via the AND gate comprising diodes 85, 86, 87 and resistor 206, to the clock inputs of flip flops 91 and 92. The inverted clock signal is applied to the clock input of shift register 93.

Diodes 85-89 provide both a clamping and a logical AND function for coupling the clock signal to the inputs of flip flops 91 and 92. Specifically, the diodes are arranged so that the first data bit from shift register 93, which is operating in a serial output mode, must be a logic "1". The second data bit is inverted by inverter 94 and therefore must be a logic "0". The remaining bits can be either a 1 or a 0 as indicated by isolation resistor 95. Because of the timing of the clock signal into shift register 93 versus the occurrence of pulses at the shift input, only a positive going zero crossing notch followed by a negative going zero crossing notch will occur at the right time to be shifted through register 93. If the first two bits are 1 and 0, respectively, and either of the other bits is a logic 1, then a pulse is applied to the clock input of flip flops 91 and 92.

Flip flops 91 and 92 act as a storage register for storing the third and fourth bits from shift register 93. If either of these bits is a logic 1, the inverted ($\overline{Q}$) output of the corresponding flip flop causes the output of comparator 95 to go low, which causes triac 100 to conduct. The duration of the output pulse from comparator 95 is also determined by the other input labeled "**A**" in FIG. 4, as discussed below. Resistors 210 and 211 act as a summation network at the non-inverting input of comparator 95. Their values are adjusted to control the output duty cycle depending on which output is high or low. For example, resistor 210 has a resistance of 100 k$\Omega$ and resistor 211 has a resistance of 150k$\Omega$. This combination produces a three level output to comparator 95 and three different duty cycles. Data 00 (OFF) is not actually transmitted, as described above. If it were, it would result in zero duty cycle, i.e. off.

Comparator 101 functions as previously described, in conjunction with the diode-resistor network connected to the input therein, for sensing the zero crossing of the input waveform. Depending upon the values chosen for the resistor, the duration of the pulse produced by comparator 101 is approximately the same as the pulse produced by inverter 41 in FIG. 2, assuming that no notch exists in the voltage. If a notch exists, the duration of that pulse is increased (since the voltage remains zero for a slightly longer time), although the frequency remains the same (120 Hz). The output from comparator 101 is inverted by inverter 102 and applied to the clock inputs of flip flops 103 and 104.

Comparator 105 operates as a pulse width detector for sensing the duration of the pulse from comparator 101 and, hence, the presence or absence of a notch. Specifically, upon a zero crossing, the output of comparator 101 goes high and stays high for a period depending upon whether or not there is a notch. During the time in which the output from comparator 101 is high, capacitor 106 charges, increasing the voltage thereon. If the output from comparator 101 stays high long enough, it will exceed the comparison voltage determined by resistors 107 and 108. When this voltage is exceeded, the output from comparator 105 goes high and this signal is coupled to the data inputs of flip flops 103 and 104.

Resistor 116 and capacitor 118 provide a propagation delay to assure that the data inputs to flip flops 103 and 104 will not go low before the clock signal goes high. Depending upon components chosen this network could be eliminated.

The **Q** output from flip flop 103 is connected via diode 109 to the data input to flip flop 104. Diode 109 and resistor 117 at the input to flip flop 104 provides an AND logic function. The **Q** output of flip flop 103 must be high for the next pulse from comparator 105 to pass. Thus, flip flops 103 and 104 acts as a two bit register for detecting consecutive pairs of notches. The output from flip flop 104 is coupled to the serial input of shift register 93.

The output from comparator 101 is also coupled by way of capacitor 111 to the input of inverter 112. Capacitor 111, resistor 113, and comparator 95 form a timer to determine the portion of each half cycle in which triac 100 is conducting. The output of inverter 112 is coupled to the inverting input of comparator 95, labeled "**A**". The time it takes to charge capacitor 115, and the quantity stored in flip flops 91 and 92 determine the duration of the pulse applied to triac 100.

For example, using the resistance values described above, if a logic 1 is stored in both of registers 91 and 92, the duration of the pulse applied to triac 100 is continuous. If only one of flip flops 91 and 92 contain a logic 1, the duration of the pulse applied to triac 100 is shorter. Specifically, considering flip flops 91 and 92 as a storage register, if the binary equivalent of a decimal "2" is stored, then the output to triac 100 is approximately two-thirds the duration of the 60 Hz line voltage. If the contents of the storage register is the binary equivalent of a decimal "1", then the duration of the signal applied to triac 100 is approximately one-third the period of 60 Hz. The data is read continuously until new data is received. Thus, the load is powered by a pulse width modulated signal.

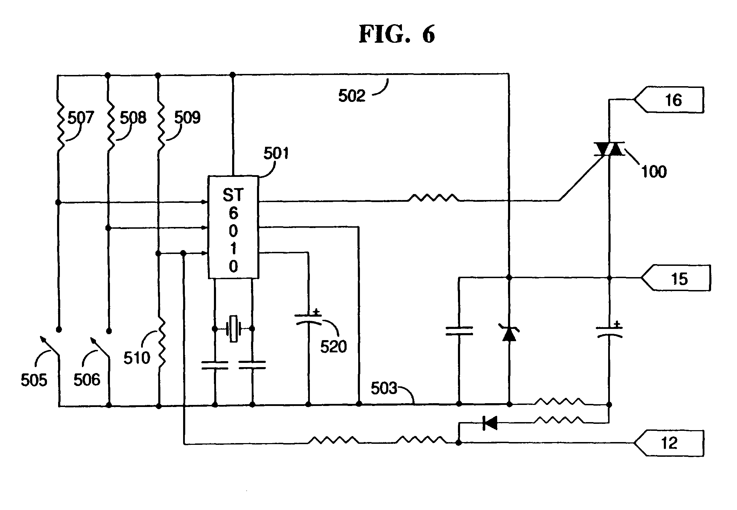

Returning to FIG. 1, if load 17 is not nearly a pure resistance, then opening a switch within transmitter 13 may not terminate the flow of current within circuitry located downstream from the transmitter. Current will be supplied by the energy stored in the reactive components of the load(s). The net effect, as seen by the receiver(s) is that the notch moves up along the waveform, away from the zero crossing. Also, since the current in a circuit is a net current, i.e. currents from individual components are summed, notches 401-403 no longer go to zero, as illustrated in FIG. 5. One then must recognize a notch at other than zero crossing. There are basically two ways to do this. One is by pattern recognition of some sort and the other is by Fourier analysis. Considering the latter first, since a pure sine wave has zero high order coefficients under Fourier analysis, one performs a fast Fourier transform of the waveform and looks for selected high order coefficients to detect a notch.

FIG. 6 illustrates the first alternative wherein the amplitude of a sine wave at various times is stored in the memory of a microcontroller. To detect a notch, the amplitude of the waveform is sampled and compared to the stored data. A difference greater than a predetermined amount is interpreted as a notch.

Specifically, microcontroller 501 is connected between power supply rails 502 and 503, which are coupled to lines 15 and 20 through voltage dropping resistors. A negative supply voltage is developed from line 12 to provide negative voltage turn-on for triac 100. This avoids what is known as "fourth quadrant operation" of the triac (where the gate is positive and the anode is negative).

Switches 505 and 506 are each coupled to an input of microcontroller 501 and to pull-up resistors 507 and 508, respectively. These switches define the address of the particular receiver for zone control purposes. The third input to microcontroller 501 is connected to the "common" line, the voltage on which varies relative to the positive supply voltage on line 15/502. Resistors 509 and 510 act as a voltage divider to center this voltage between rails 502 and 503.

Capacitor 520, initially discharged, is a timing capacitor connected to a reset input of microcontroller 501. When power is first applied, or after a power outage, capacitor 520 charges. The initial low voltage resets the microcontroller. Thereafter, the reset input goes high and the microcontroller functions normally. The clock for controller 501 is conventional, comprising the crystal, or resonator, and capacitors illustrated.

Microcontroller 501, in a particular embodiment of the present invention, comprised an ST6010 microcontroller as sold by SGS/Thomson. This controller has programmable inputs which can provide analog input to an internal analog-to-digital converter. After initial synchronization, the line voltage is sampled and compared to a predetermined set of data to determine whether a complete or an incomplete sine wave is present. Appendix I, which forms a part of this disclosure, is the source code used for implementing the receiver with an ST6010. The "#A/D" routine works with any input port programmed as an analog input.

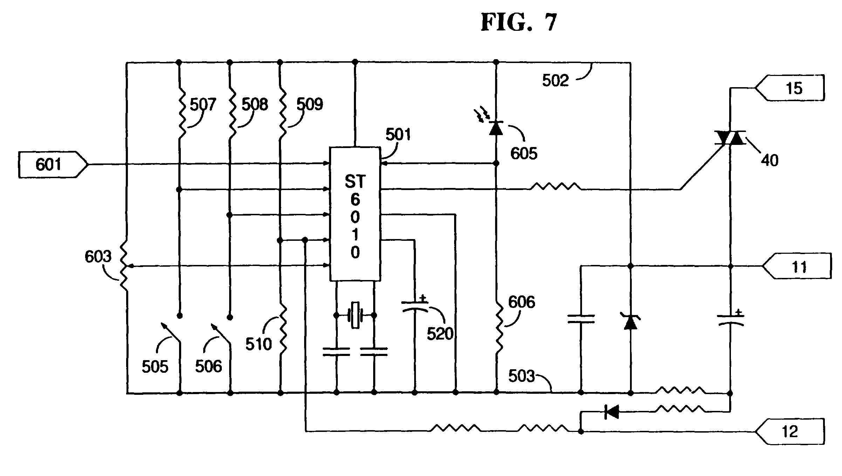

FIG. 7 illustrates the corresponding transmitter using a microcontroller. As is apparent from a comparison with FIG. 6, the structure of the transmitter is essentially the same as that of the receiver, with the following additional inputs used. Analog input 601 provides an interconnection to an external energy management system. A signal on this line controls the power to the load. Alternatively, or additionally, the input switches are used for either power level or zone selection. If used for power level selection, the two switches provide three discrete levels of power (and OFF). Alternatively, a continuous analog input is provided by potentiometer 603.

Another analog input is connected to the junction of photodiode 605 and resistor 606. This input provides feedback for control of the power level, depending on the placement of photodiode 605. When photodiode 605 is exposed to ambient light, the circuit acts to control the power to lamps to supplement the ambient light and maintain a preset illumination level. When photodiode 605 is exposed to direct light from the lamp, the circuit maintains the luminosity of the lamp at a predetermined level.

Appendix II, which forms a part of this disclosure, is the source code used for implementing a transmitter with an ST6010.

While a preferred embodiment of the present invention has been implemented using the following components, it is understood by those of skill in the art that various equivalent components can be substituted to obtain the same function.

| FIG. 2 | | FIG. 4 |
|---|---|---|
| 42,43,71,72 | 74HCT04 | 81,82,94,102,112 |

(continued)

| FIG. 2 | | FIG. 4 |
|---|---|---|
| 41,62,65,75 | LM339 | 95,101,105 |
| 53 | 4013 | 91,91,103,104 |
| 54 | 40194 | 93 |
| 70 | 2N4402 | - |

The present invention thus provides a power line communication system which does not use a carrier to send information. It removes power to transmit intelligence. The transmitter acts like a chopper working in bursts to encode data on the power line. The receiver acts like a variable duty cycle chopper to convey information on the control line. Cross-talk with other systems is avoided. In addition, devices downstream from the transmitter can be controlled independently. Noise in the notch is essentially eliminated since the receiver and load are disconnected from the power lines, the chief source of noise, during the notch. Data integrity is enhanced by requiring a predetermined sequence of zero crossings such that **n** bits of data are preferably transmitted by no more than **n** consecutive zero crossings.

Having thus described the present invention it will be apparent to one of ordinary skill in the art that various modifications can be made. For example, while described in the context of operating with a "right shift" (least significant bit first), the direction of shift is immaterial as long as the system is consistent, e.g. $D_2$ and $D_3$ become the prefix bits for left shift. While it is possible to use a suffix to denote valid data, such is not preferred. While described in terms of a combination of discrete components and integrated circuits, it is understood by those of skill in the art that the transmitter and receiver are readily implemented as integrated circuits. While the preferred embodiment uses notches on Consecutive half cycles of the alternating current, one could use consecutive cycles, e.g. four consecutive notches or two notches on consecutive, positive (or negative) going zero crossings; etc. Obviously, the transmission time is doubled if two cycles are used, tripled if three cycles are used, and so on.

Appendix I - Receiver

```
            LDIRR       #STRT        $152
            %DDR                     JRZ:IZZ
            $255                     INCY
            CALL:                    JP:
            LDR                      IZ
            RETI                     CALL:       #IZZ
            WAT         #WAT         A/D
            JP:                      $4
            WAT                      $4
            SET@7       #INT         $4
            %TSCR                    $4
            LDIRR                    $4
            $129                     $4
            $137                     $4
            CALL        #IA          $4          #IR
            A/D                      $4
            LDAY                     LDAY        #IW
            CPIA                     CPIA
            $140                     $140
            JRZ:IZ                   JRZ:IZZZ
            INCY                     DECY
            JP:                      JP:
            IA                       IZZ
            CALL:       #IZ          CALL:       #IZZZ
            A/D                      A/D
            LDA(Y)                   LDA(Y)
            SUBAR                    COMA
            $132                     SUBAR
            CALL:                    $132
            DECT                     CALL:
            CALL:                    DECT
            BITA                     CALL:
            LDAY                     BITB
            CPIA                     LDAY
```

```
CPIA                          RET
$152              LDIRR            #DNC
JRZ:IOUT                      $159
INCY                          $0
JP:                           LDIRR
IZZZ                          $158
CALL:        #IOUT            $0
OUT                           $4
RETI                          $4
JRR@7        #DECT            $4
%ACCU                         $4
DA                            $4
COMA                          RET
INCR                          $4               #BITA
%ACCU                         $4
$4           #DA              $4
$4                            $4
CPIA                          $4
$32                           LDAR
JRC:DC                        $159
JP:                           CPIA
ONC                           $64
CPIA         #DC              JRNC:BNC
$56                           SET@0
JRNC:DNCC                     $133
LDIA                          RET              #BNC
$56                           $4               #BITB
ADDAR        #DNCC            $4
$159                          $4
LDRA                          $4
$159                          $4
JRNC:DX                       $4
INCR                          LDAR
$158                          $159
$4           #DX              CPIA
$4                            $64
                              JRNC:BBNC
                              SET@1
```

9

```
$133                          $4
RET          BBNC             LDIRR
JRR@0        #OUT             $141
$133                          $4
OA                            LDIRR
JRR@1                         $142
$133                          $4
OA                            LDIRR
SET@0                         $143
$134                          $4
LDAR                          LDIRR
$134                          $144
ANDDIA                        $4
$99                           LDIRR
CPIA                          $145
$65                           $4
JRNZ:0A                       LDIRR
LDAR                          $146
$134                          $4
ANDDIA                        LDIRR
$28                           $147
LDRA                          $4
%DR                           LDIRR
LDAR         #OA              $148
$134                          $4
ADDAR                         LDIRR
$134                          $149
LDRA                          $4
$134                          LDIRR
LDIRR                         $150
$133                          $4
$0                            LDIRR
RET                           $151
                              $4
LDIRR        #LDR             LDIRR
$140                          $152
```

```
$4                              DDR         $4
LDIRR                           DR          $0
$153                            ADDR        $12
$4                              ADSCR       $13
LDIRR                           TCR         $8
$154                            TSCR        $9
$4                              ACCU        $255
LDIRR
$155
$4                              READY
LDIRR
$156
$4
RET

JRR@7           #A/D
%TSCR
A/D
LDAR
%ADDR
LDRA
$132
LDIRR
%ADSCR
$61
LDIRR
%TSCR
$56
LDIRR
%TCR
$75
RET
JP:
INT
JP:
STRT
```

Appendix II - Transmitter

```
LDIRR      #STRT              $24
%DDR                          JRR@0      #W
$254                         %DR
RES@7      #R                 W
%DR                          JRS@0      #WW
LDIRR                        %DR
$158                         WW
$128                         DECR
LDIRR                        $157
$157                         JRNZ:W
$8                           JP:
LDAR                         R
$158                         JRR@3      #A/D
ADDAR      #NZ              %ADSCR
%ACCU                        A/D
JRNC:NC                      LDAR
CALL:                       %ADDR
NOTC                         LDRA
DECR                         $132
$157                         LDIRR
JRNZ:NZ                     %ADSCR
JRR@0      #NC               $61
%DR                          RET
NC                           LDIRR      #TMR
JRS@0      #V               %TSCR
%DR                          $60
V                            LDIRR
DECR                        %TCR
$157                         $48
JRZ:OUT                      JRR@7      #TB
JP:                        %TSCR
NZ                           TB
LDIRR      #OUT              RET
$157                         JRS@0      #NOTC
                            %DR
                             NOTC
```

```
LDIRR
$156                    JP:
$32                     STRT
DECR           #NX      DDR         $4
$156                    DR          $0
JRNZ:NX                 ADDR        $12
SET @7                  ADSCR       $13
JRR@0          #NA      TCR         $8
%DR                     TSCR        $9
NA                      ACCU        $255
CALL:                   *
TMR
RES@7
%DR
LDIERR
$159
$32
DECR           #NDD
$159
JRNZ:NDD
SET@7
%DR
JRS@0          #NBB
%DR
NBB
CALL:
TMR
RES@7
%DR
LDIRR
$159
$32
DECR           #NEE
$159
JRNZ:NEE
RET
```

## Claims

1.  A transmitter (13) for a system for communicating over AC power lines (11,12,15) comprising:

    zero crossing detector means (41, 44-47) for producing a pulse in response to each zero crossing of said alternating current;

    pulse generating means (42,44) coupled to said power lines for producing pulses synchronized with and at the same frequency as said alternating current characterized in that it further comprises:

    shift register means (54) for storing data representative of a predetermined power level;

    control means (60) connected to said shift register means (54) for causing said data to be serially read out from said shift register means (54) as a series of pulses;

    logic means (62) coupled to said zero crossing detector means (41,44-47), said pulse generating means (42,44), and said shift register means (54) for combining the outputs thereof to produce a control signal comprising pulses; and

    switch means (40) in series with at least one of said AC power lines and responsive to said control signal for being selectively rendered conductive or non-conductive.

2.  A transmitter (13) as set forth in claim 1 wherein some of the data inputs ($D_0$-$D_3$) to said shift register means (54) are kept at a fixed voltage to provide the same data on successive loadings of said shift register means (54) and wherein some of the data inputs ($D_0$-$D_3$) to said shift register means (54) are not at a fixed voltage to provide variable data on successive loadings of said shift register means (54).

3.  A transmitter (13) as set forth in claim 1 wherein said logic means (62) includes timing means for determining the duration of pulses in said control signal.

4.  A transmitter (13) as set forth in claim 3 wherein said logic means (62) further comprises timing means for controlling the interval during which said control signal is applied to said switch means (40).

5.  A receiver (14) for a system for communicating over AC power lines (11,12,15) comprising:

    zero crossing detector means (101) for producing a pulse in response to each zero crossing of said alternating current; characterized in that it further comprises pulse duration detection means (105) coupled to the output of said zero crossing detector means (101) for producing a pulse only when the duration of a pulse from said zero crossing detector means (101) exceeds a predetermined time;

    shift register means (93) coupled to the output of said pulse duration detection means (105) for storing data, said shift register means (93) having parallel data outputs;

    logic means (91,92) coupled to the outputs of said shift register means (93) for analyzing the content of said data;

    data register means (95) coupled to the output of said logic means (91,92) and said shift register means (93) for selectively storing data under the control of said logic means (91,92) ;

    timing means (95,111,113) coupled to said data register means for producing a pulse width modulated signal in response to said data; and

    switch means (100) connected to one of said AC power lines and responsive to said pulse width modulated signal for being selectively rendered conductive or non-conductive.

## Patentansprüche

1.  Ein Transmitter (13) für ein System zur Kommunikation über Wechselstromversorgungsleitungen (11, 12, 15) mit:

    einem Nulldurchgangsdetektormittel (41, 44-47) zum Erzeugen eines Pulses in Erwiderung auf jeden Nulldurchgang des Wechselstroms;

    einem Pulserzeugungsmittel (42, 44), das an die Versorgungsleitungen gekoppelt ist, zum Erzeugen von Pulsen, die die gleiche Frequenz aufweisen wie der Wechselstrom und mit dieser synchronisiert sind, dadurch gekennzeichnet, daß er weiter umfaßt:

    ein Schieberegistermittel (54) zum Speichern von für einen vorbestimmten Leistungspegel repräsentativen

14

Daten;

ein Steuermittel (60), das mit dem Schieberegister (54) in Verbindung steht, zum Bewirken, daß die Daten seriell aus dem Schieberegistermitte1 (54) als Reihe von Pulsen ausgewiesen werden;

einem Logikmittel (62), das an das Nulldurchgangsdetektormittel (41, 44-47), das Pulserzeugungsmittel (42, 44) und das Schieberegistermitte1 (54) gekoppelt ist zum Kombinieren ihrer Ausgaben zur Erzeugung eines Pulse umfassenden Steuersignals; und

einem Schaltmittel (40), das in Reihe mit wenigstens einer der Wechselstromversorgungsleitungen ist und das auf das Steuersignal anspricht, um selektiv einen leitenden oder nichtleitenden Zustand einzunehmen.

2. Ein Transmitter (13) nach Anspruch 1, wobei einige der Dateneingaben ($D_0$-$D_3$) an das Schieberegistermittel (54) bei einer fixierten Spannung gehalten werden, um die gleichen Daten bei nachfolgenden Beladungen des Schieberegistermittels (54) zu schaffen, und wobei einige der Dateneingaben ($D_0$-$D_3$) an das Schieberegistermittel (54) nicht bei einer fixierten Spannung sind, um variable Daten bei nachfolgenden Beladungen des Schieberegistermittels (54) zu schaffen.

3. Ein Transmitter (13) nach Anspruch 1, wobei das Logikmittel (62) Timingmittel enthält zum Bestimmen der Dauer von Pulsen in dem Steuersignal.

4. Ein Transmitter (13) nach Anspruch 3, wobei das Logikmittel (62) weiter Timingmittel umfaßt zum Steuern des Zeitintervalls, während dem das Steuersignal auf das Schaltmittel (40) angewendet wird.

5. Ein Empfänger (14) für ein System zur Kommunikation über Wechselstromversorgungsleitungen (11, 12, 15) mit:

einem Nulldurchgangsdetektormittel (101) zum Erzeugen eines Pulses in Erwiderung auf jeden Nulldurchgang des Wechselstroms; dadurch gekennzeichnet, daß er weiter umfaßt:

ein Pulsdauerdetektionsmittel (105), das an den Ausgang des Nulldurchgangsdetektormittels (101) gekoppelt ist, zum Erzeugen eines Pulses nur dann wenn die Dauer eines Pulses von dem Nulldurchgangsdetektormittel (101) ein vorbestimmte Zeit überschreitet;

ein Schieberegistermittel (93), das an den Ausgang des Pulsdauerdetektionsmittel (105) gekoppelt ist, zum Speichern von Daten, wobei das Schieberegistermittel (93) parallele Datenausgänge aufweist;

ein Logikmittel (91, 92), das an die Ausgänge des Schieberegistermittels (93) gekoppelt ist, zum Analysieren des Inhalts der Daten;

ein Datenregistermittel (95), das an den Ausgang des Logikmittels (91, 92) und des Schieberegistermittels (93) gekoppelt ist, zum selektiven Speichern von Daten unter Steuerung des Logikmittels (91, 92);

ein Timingmittel (95, 111, 113), das an das Datenregistermittel gekoppelt ist, zum Erzeugen eines pulsbreitenmodulierten Signals in Erwiderung auf die Daten; und

ein Schaltmittel (100), das mit einer der Wechselstromversorgungsleitungen verbunden ist und auf das pulsbreitenmodulierte Signal anspricht, um selektiv einen leitfähigen oder nicht leitfähigen Zustand einzunehmen.

## Revendications

1. Emetteur (13) pour un système permettant de communiquer sur des lignes d'alimentation en courant alternatif (11, 12, 15), comprenant :

un moyen de détecteur de passage par zéro (41, 44-47) pour produire une impulsion en réponse à chaque passage par zéro dudit courant alternatif ;
un moyen de génération d'impulsions (42, 44) couplé auxdites lignes d'alimentation pour produire des impulsions synchronisées avec ledit courant alternatif et à la même fréquence que celui-ci,

caractérisé en ce qu'il comprend en outre :

un moyen de registre à décalage (54) pour stocker des données représentatives d'un niveau de puissance prédéterminé ;
un moyen de commande (60) connecté audit moyen de registre à décalage (54) pour provoquer la lecture série desdites données dans ledit moyen de registre à décalage (54) en tant que série d'impulsions ;
un moyen logique (62) couplé audit moyen de détecteur de passage par zéro (41, 44-47), audit moyen de génération d'impulsions (42, 44) et audit moyen de registre à décalage (54) pour combiner leurs sorties afin de produire un signal de commande comprenant des impulsions ; et
un moyen de commutateur (40) en série avec au moins l'une desdites lignes d'alimentation en courant alternatif et sensible audit signal de commande de manière à être rendu sélectivement conducteur ou non conducteur.

2. Emetteur (13) selon la revendication 1, dans lequel certaines des entrées de données ($D_0$-$D_3$) sur ledit moyen de registre à décalage (54) sont maintenues à une tension fixe pour produire les mêmes données lors de chargements successifs dudit moyen de registre à décalage (54) et dans lequel certaines des entrées de données ($D_0$-$D_3$) sur ledit moyen de registre à décalage (54) ne sont pas à une tension fixe pour produire des données variables lors de chargements successifs dudit moyen de registre à décalage (54).

3. Emetteur (13) selon la revendication 1, dans lequel ledit moyen logique (62) inclut un moyen de cadencement pour déterminer la durée des impulsions dans ledit signal de commande.

4. Emetteur (13) selon la revendication 3, dans lequel ledit moyen logique (62) comprend en outre un moyen de cadencement pour commander l'intervalle pendant lequel ledit signal de commande est appliqué sur ledit moyen de commutateur (40).

5. Récepteur (14) pour un système permettant de communiquer sur des lignes d'alimentation en courant alternatif (11, 12, 15), comprenant :

un moyen de détecteur de passage par zéro (101) pour produire une impulsion en réponse à chaque passage par zéro dudit courant alternatif,
caractérisé en ce qu'il comprend en outre un moyen de détection de durée d'impulsion (105) couplé à la sortie dudit moyen de détecteur de passage par zéro (101) pour produire une impulsion seulement lorsque la durée d'une impulsion provenant dudit moyen de détecteur de passage par zéro (101) excède un temps prédéterminé ;
un moyen de registre à décalage (93) couplé à la sortie dudit moyen de détection de durée d'impulsion (105) pour stocker des données, ledit moyen de registre à décalage (93) comportant des sorties de données parallèles ;
un moyen logique (91, 92) couplé aux sorties dudit moyen de registre à décalage (93) pour analyser le contenu desdites données ;
un moyen de registre de données (95) couplé à la sortie dudit moyen logique (91, 92) et ledit moyen de registre à décalage (93) pour stocker sélectivement des données sous la commande dudit moyen logique (91, 92) ;
un moyen de cadencement (95, 111, 113) couplé audit moyen de registre de données pour produire un signal modulé en largeur d'impulsion en réponse auxdites données ; et
un moyen de commutateur (100) connecté à l'une desdites lignes d'alimentation en courant alternatif et sensible audit signal modulé en largeur d'impulsion de manière à être rendu sélectivement conducteur ou non conducteur.

FIG. 1

FIG. 3

x    0    1    0

FIG. 5

FIG. 2

EP 0 502 176 B1

FIG.4

# FIG. 6

EP 0 502 176 B1

FIG. 7